# EUROPEAN PATENT SPECIFICATION

(11) **EP 3 747 097 B1**
(45) Date of publication and mention of the grant of the patent: **23.11.2022**
(21) Application number: 19707478.4
(22) Date of filing: 30.01.2019
(51) Int. Cl.: H02G 5/08

(54) **ELECTRICAL BOX ADAPTED TO BE FIXED TO A BUSBAR**
ABGANGSKASTEN FÜR STROMSCHIENENVERTEILER
COFFRET DE BRANCHEMENT POUR BARRES BLINDÉES DE PUISSANCE

(30) Priority: 31.01.2018 IT 201800002262
(43) Date of publication of application: 09.12.2020
(73) Proprietor: BTICINO S.P.A., 21100 Varese (VA) (IT)
(72) Inventor: MEDOLAGO, Alexandre François, 24048 Treviolo (BG) (IT)
(74) Representative: Perani & Partners S.p.A.
(86) International application number: PCT/IB2019/050745
(87) International publication number: WO 2019/150276

(56) References cited:
- CN-A- 102 386 596
- CN-Y- 201 327 979
- GB-A- 2 241 278

## Description

### Field of The Invention

The invention finds application in the field of power distribution using busbar conduits. In particular, the invention relates to a box for electrical components adapted to be fixed suspended to one or more of a variety of types of busbar conduits for connection of a power consuming unit to the busbar conduit.

### Description of the prior art

Busbar conduits are usually used in large buildings, such as factories or shopping malls, to distribute large amount of low voltage current to the interior of the building. Busbar conduits are made up of mutually joined segments, comprising busbar conductors enclosed in a rigid casing.

For a power consuming unit to be connected with the busbar conductors, the casing of a segment may have one or more openings, and appropriate connection boxes may be fixed to the casing at the openings. Electric parts, such as terminals, circuit breakers and fuses, which are required for connection and protection of a power consuming unit to the busbar conductors through the openings of the casing, may be arranged in the box.

The openings are generally formed in one side of the casings and the boxes are rigidly joined to the busbar conduits from the bottom, i.e. suspended therefrom. In a first type of known boxes, two pairs of jaws, connected to opposite faces of the box, are provided for fixing the box to the conduit. The jaws project out of the box toward the conduit, and have suitable attachment members, such as recesses or projections, which are designed to cooperate with brackets projecting out of the casing to support the box. Therefore, the box will be suspended from the conduit and be rigidly joined thereto by the jaws.

The jaws are adapted to rotatable relative to the box, about suitable fixed pivots to fix the box to the conduit and to release it from the conduit. Particularly, in operation the jaws extend substantially parallel to each other in a generally vertical direction. In order to release the box, the jaws are rotated to move the attachment members apart from each other, and hence from the brackets of the conduit.

CN 201327979 and CN 102386596 disclose two examples of such boxes. Here, in particular, each jaw is rotatably connected to the box via a respective first pivot, of fixed type, which allows rotation and prevents translation of the jaws relative to the container. Such pivot also serves the purpose of supporting the box relative to the jaw. A second pivot of sliding type, for each jaw, is fixed to the box and is able to slide along a slot formed in the jaw, with the only purpose of limiting the rotation range of the jaw. GB2241278A discloses the preamble of claim 1.

Busbar conduits designed for different applications or powers may have different sizes, and their brackets may be particularly located at different distances from the box in the vertical direction. In addition, a single conduit segment may have sections of different widths. The busbar conduits may be spaced apart at the openings to provide the space required for the connection elements to fit between the conductors. Therefore the casing and its brackets may also have different widths.

Due to these different positions of the brackets, a second type of boxes must be formed with jaws having different shapes, sizes or positions for each type of conduit, which entails apparent drawbacks in terms of fabrication costs and stock management. Therefore, it would be desirable to provide boxes that can be adapted to various types of busbar conduits.

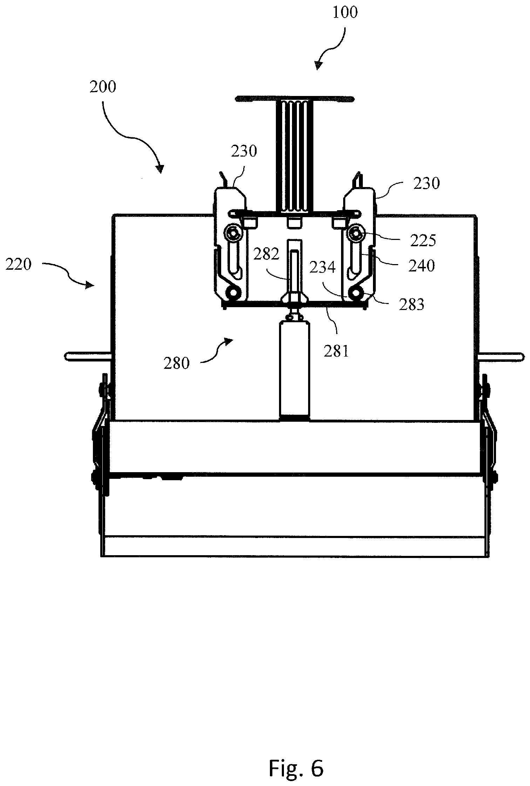

In a third type of known boxes 200, an example whereof is shown in Figure 6, the jaws 230 have a rectilinear slot 240 which extends in the direction of the jaw 230, i.e. generally in the vertical direction. The pivots required for rotation of the jaws 230 are not fixed but extend through the slots and are slidable therein. In other words, the jaws 230 support the container 220 at the same pivots 225 which slide along the slots 240 and act as a center of rotation for the opening and closing movement of the jaws 230.

Thus, the position of the jaws 230 relative to the container 220 may be adjusted in the vertical direction by sliding the pivots 225 between the two ends of the slots 240, thereby allowing the box 200 to fit various busbars conduits 100. This is not possible with the boxes described in CN 201327979 and CN 102386596.

In a box 200 like that of Figure 6, the weight of the box 200 causes the pivots 226 to vertically move along the slot 240 toward the bottom end. A lock mechanism 280 is thus required to maintain the pivots 225 at the desired height. If such lock 280 is not provided, box 200 risks to be fixed to the conduit 100 unstably, or to be located at an excessive distance from the conduit 100, which will entail difficulties in the electrical connection to the busbar conductors.

For example, the pivots 225 may be locked by a support 281 attached to the container 220 and arranged in a position that may be vertically adjusted by means of an endless screw 282. Each jaw 230 is equipped with a hook 234 for fixation to the support 281 at additional pivots 283, when the jaws 230 are oriented to clamp onto the conduit 100. Therefore, the jaws 230 hold the support 281, which in turn holds the container 220 and keeps the container 220 in its proper position relative to the jaws 230.

### Problem of the prior art

The locking mechanism 280 of the third type of prior art boxes is comparably complex and involves high costs for fabrication and adjustment during installation. Furthermore, during operation of the box, the locking mechanisms 280 shall withstand the entire weight of the box, whereby they must be robust and reliable enough to avoid the risk of separation of the box from the busbar conduit throughout the useful life of the busbar.

### Summary of The Invention

The object of the present invention is to solve the above discussed problems of the prior art by providing the possibility to adjust the position of the jaws and keep them in their proper position without requiring a complex locking system.

A further object of the invention is to provide position adjustment of the jaws not only in a vertical direction, but also in a horizontal direction.

Another object of the invention is to simplify the installation of a box.

These and other objects are fulfilled by a box for electrical components as defined in any of the accompanying claims. The box comprises a container and two jaws that are rotatably attached to one side wall of the container. Of course, two more jaws may be attached to another side wall to impart greater stability to the box.

The side walls of the container extend from a base of the container to an edge that is spaced apart from the base in a longitudinal direction, which preferably coincides, in operation, with a vertical direction. The base is generally designed to face a busbar conduit.

The jaws are adapted to rotate about respective pivots to move the attachment members on the jaws, which are adapted to attach the jaws to a busbar conduit, toward and away from each other. The jaws, as well as their respective pivots, are generally spaced apart from each other in a transverse direction.

When the box is in use, the jaws are in a closing orientation, in which they project out of the container in the longitudinal direction. In order to separate the box from the conduit, the jaws may be rotated to move the attachment members away from the busbar conduit.

The box comprises a guide for each pivot, so that the pivots can slide along the guides between a first end and a second end of the respective guides. In the preferred embodiment, the pivots are attached to the container and the guides are formed as slots in the jaws.

The jaws may be moved to the closed position both when the pivots are at the first ends and when the pivots are at the second ends. Therefore, the box may be locked to busbar conduits of different sizes.

In each guide the first and second ends are spaced apart at least in the longitudinal direction. In the preferred embodiment, the ends of the guides associated with a first pair of jaws are only spaced apart in the longitudinal direction, whereas the ends associated with a second pair of jaws are also spaced in the transverse direction. This allows the box to fit conduits with varying transverse dimensions along the conduit.

Each guide is shaped such as to prevent the respective pivot, when the pivot is located at the first end, from moving in the longitudinal direction toward the second end, namely from moving in directions having longitudinal components oriented toward the second end.

However, it should be noted that this may simply happen for one end only. This is because the weight of the container ensures stable positioning of the pivot at the other end of the guide even in prior art boxes.

Therefore, each guide is further preferably shaped such as to prevent its respective pivot from moving in the longitudinal direction away from the first end, when the pivot is located at the second end.

The characteristics of the guide of the invention advantageously afford stable positioning of the pivot also at the first end of the guide. Therefore the jaws may be arranged with the pivots at either end of the guide and the weight of the container will not cause the pivots to move along the guides. No complex locking mechanism will be thus required for the sliding motion of the pivots. At most, transverse jaw locks may be provided to prevent the pivots from moving from the ends of the guides, without requiring such locks to counteract the weight of the box.

For the guide to prevent the aforementioned longitudinal movement of the pivots from the first ends toward the second ends, the guides have a non-straight development, and particularly also partially extend in the transverse direction.

More in detail, considering a first sliding direction of a guide at the first end, such direction is perpendicular to the longitudinal direction or, if it has a longitudinal component, the latter is directed away from the second end.

### BRIEF DESCRIPTION OF THE DRA WINGS

The characteristics and advantages of the present invention will result from the following detailed description of a possible practical embodiment, illustrated as a nonlimiting example in the set of drawings, in which:
- Figure 1 shows a perspective view of a busbar conduit and a box of the invention,
- Figures 2a-2b show front-sectional views of two different busbar conduits that may have the box of the invention fix thereto,
- Figures 2c-2d show front-sectional views of a third busbar conduit that may have the box of the invention fixed thereto, as viewed along distinct sectional planes,

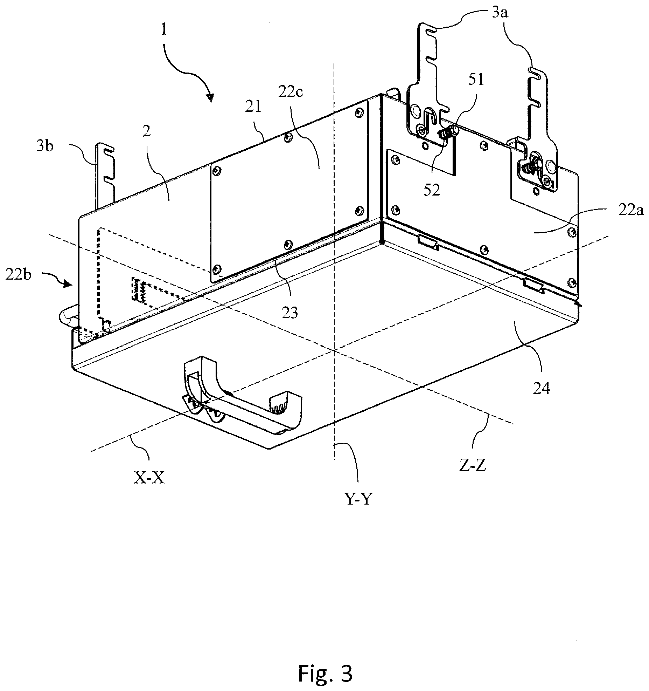

- Figure 3 shows a perspective view of the box of Figure 1,
- Figures 4a and 4b show front views of the box of Figure 1 in two different operating configurations,
- Figures 5a, 5b, 5c show rear views of the box of Figure 1 in three different operating configurations, and
- Figure 6 shows an example of a box according to the prior art suspended from a busbar.

### Detailed Description

The accompanying figures show one embodiment of the box for electrical components 1 of the invention, and certain busbar conduits 100 that may have the box 1 fixed suspended thereto. Certain characteristics of a busbar conduit 100 will be first described, to better understand the characteristics of the box 1.

Each busbar conduit 100 comprises a casing 101, which mainly extends in a direction of extension X-X. The busbar conduit 100 further comprises a plurality of busbar conductors 102 accommodated in the casing 101, and also extending in the direction of extension X-X. Each busbar conduit 102 has two side edges 103 that are spaced apart in a longitudinal direction Y-Y, which is transverse, e.g. perpendicular, to the direction of extension X-X. The busbar conductors 102 are spaced apart in a direction Z-Z that is transverse, preferably perpendicular, to the direction of extension X-X and to the longitudinal direction Y-Y.

According to the most common installation practice, the longitudinal direction Y-Y substantially coincides with a vertical direction, i.e. the direction of the weight force. Therefore, the direction of extension X-X and the transverse direction Z-Z are oriented in a substantially horizontal direction. Nevertheless, the busbar conductors 102 may be arranged in different directions within the casing 101.

The casing 101 has a plurality of faces 104, comprising a base face 104a which is transverse, preferably perpendicular to the longitudinal direction Y-Y. The casing 101 also has an opening 105 for electrical components to extend therethrough, and optionally a cover 106 for reversibly closing the opening 105. The opening 105 is formed in the base face 104a.

More in detail, the busbar conduit 100 has a main portion 107a and a connecting portion 107b for a box 1, and the opening 105 is placed at the connecting portion 107b. The busbar conduit 100 may obviously also comprise a plurality of main portions 107a and/or connecting portions 107b, as well as a plurality of openings 105. It shall be noted that the busbar conductors 102 are close together at the main portion 107 due to thermal requirements, and are spaced apart at the connecting portion 107b due to connection requirements.

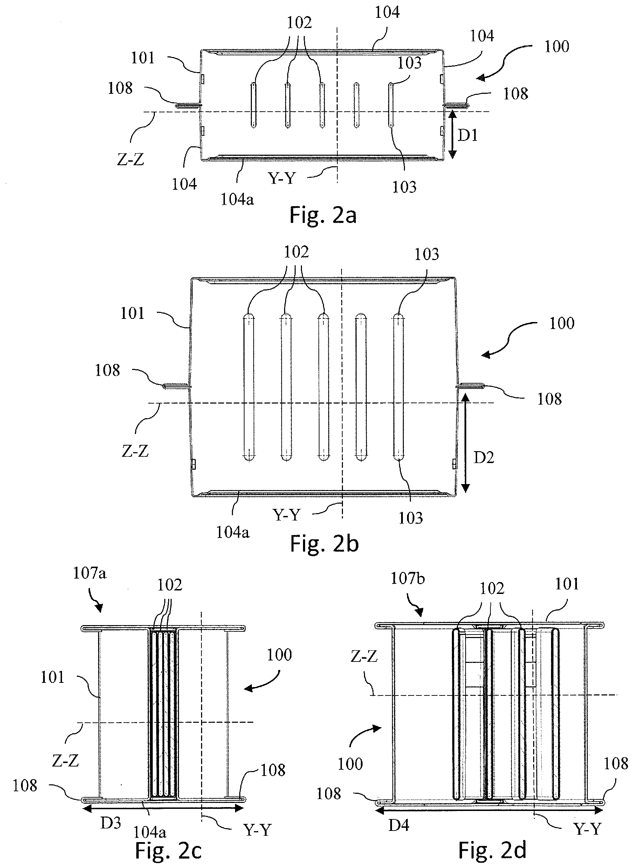

The busbar conduit 100 comprises a plurality of support elements 108, here in the form of brackets or flanges that project out of the casing 101 in the transverse direction Z-Z. As shown in Figures 2a-2d, in different embodiments the support elements 108 may be located at the base face 104a or may be spaced apart from the base face 104a in the longitudinal direction Y-Y at different distances D1, D2 therefrom.

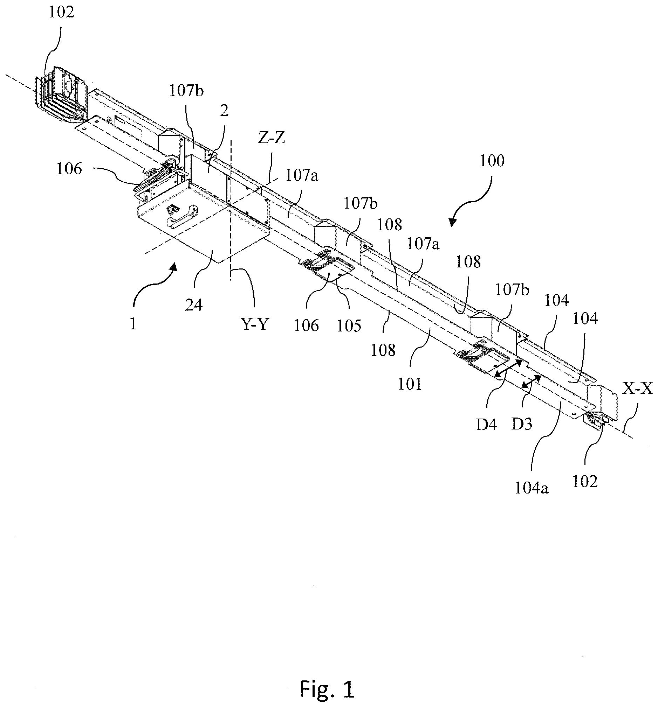

In addition, a distance D3 between the support elements 108 at the main portion 107a, as generally measured along the transverse direction Z-Z, may be smaller than the distance D4 between the support elements 108 at the connecting portion 107b, as shown in Figures 1, 2c, 2d. Alternatively, the two distances D3, D4 between the support elements 108 at the main portions and at the connecting portion 107a, 107b may be the same.

The box for electrical components 1 comprises a container 2. The container 2 has a base 21 that, during use, i.e. when the box is fixed to the busbar conduit 100, faces the busbar conduit 100, and particularly the base face 104a of the casing 101. The base 21 of the container 2 also has an opening (not shown) for the passage of electrical parts, particularly electric connectors 26, which in use may face the opening 105 of the casing 101. The container 2 contains electric connectors 26 that are shaped to be connected to the busbar conductors 102.

The container 2 additionally comprises a plurality of side walls 22a, 22b, 22c, 22d, which extend from the base 21 to an edge 23, spaced apart from the base 21 in a longitudinal direction Y-Y. In other words the side walls 22a, 22b, 22c, 22d extend away from the base 21 in the longitudinal direction Y-Y.

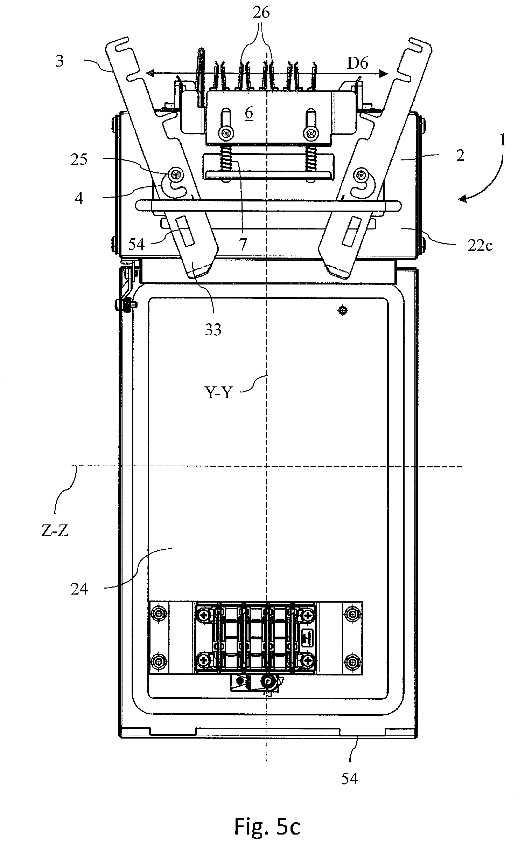

Optionally the box 1 also comprises a closing member 24 that can be fixed to the container 2, particularly at its edge 23. The closing member 24 may be provided, for instance, in the form of a lid for the container 2. In the illustrated embodiment, the closing member 24 is rotatably attached to the container 2, and it is shown in Figure 5c as rotated away from the edge 23 relative to the container 2. It shall be noted that the base 21 and the side walls 22a, 22b, 22c, 22d of the container 2, as well as a possible closing member 24, delimit a space adapted to accommodate electrical components, particularly the electric connectors 26.

The box 1 comprises two jaws 3 that are rotatably attached to one of the side walls 22a, 22b, 22c, 22d. The jaws 3 are spaced apart from each other in the transverse direction Z-Z. Furthermore, the jaws 3 have respective free end portions 31 projecting out of the container 2 in the longitudinal direction Y-Y, and particularly toward the busbar conduit 100, when the jaws are in at least one use or closing orientation, as explained below. In such use orientation, the container 2 is preferably below the free end portions 31 of the jaws 3.

In the embodiment as shown in the figures, the box 1 comprises two first jaws 3a and two second jaws 3b, with the first two jaws 3a attached to a first side wall 22a and the two second jaws 3b attached to a second side wall 22b. The first and second side walls 22a, 22b are in opposite positions and are preferably spaced apart in the direction of extension X-X. In any case, unless stated otherwise, two jaws 3 will be generally described, with reference to both first jaws 3a and second jaws 3b. The first jaws 3a and the second jaws 3b are not necessarily equal, but can be formed according to alternative embodiments, or an alternative provides that the first jaws 3a incorporate the typical inventive features and the second jaws 3b may be of known type.

The jaws 3 are adapted to hold the container 2 suspended. For this purpose, each jaw 3 has one or more attachment members 32 configured to attach the jaw 3 the busbar conduit 100. More in detail, the attachment members 32 are configured to attach the jaws 3 to a busbar conduit 100 so that the container 2 will be suspended from the busbar conduit 100 and the weight force will act on the container 2 in the longitudinal direction Y-Y away from the busbar conduit 100.

In the illustrated embodiment each jaw 3 has three attachment members 32. This improves the adaptability of the box 1 to different busbar conduits 100. In any case, a single attachment member 32 for each jaw 3 will be sufficient, and reference will be made to this arrangement hereinbelow.

In use, the attachment members 32 face the busbar conduit 100, i.e. the attachment member 32 of a jaw 3 faces the opposite jaw 3. In particular, the attachment members 32 are shaped to mate the support elements 108 of the busbar conduit 100. Furthermore, the attachment members 32 project with respect to the base 21 of the container 2 in the longitudinal direction Y-Y.

Each attachment member 32 may be provided, for example, in the form of a slit 32a for receiving a support member 108, or in the form of a projection 32b adapted to rest on a support element 108.

The box 1 comprises a pivot 25 for each jaw 3. Therefore, the box 1 comprises at least two pivots 25, and in the preferred embodiment it comprises two first pivots for the first two jaws 3a and two second pivots for the two second jaws 3b. One pair of pivots 25 will be only described, with reference to both.

In the illustrated embodiment, the pivots 25 are fixed to the container 2, but a person skilled in the art will recognize that the pivots 25 may also be fixed to the jaws 3. Preferably, when the container 2 is held suspended from a busbar conduit 100 through the jaws 3, the jaws 3 are configured to support the container 2 substantially only at the pivots 25.

The two pivots 25 are spaced apart in the transverse direction Z-Z. The two jaws 3 are adapted to be rotated about respective pivots 25 to move the attachment members 32 toward and/or away from each other, i.e. to move the attachment members 32, during use, toward or away from the busbar conduit 100 and particularly the support elements 108. In other words, the two jaws 3 are adapted to pivot relative to each other to clamp the busbar conduit 100.

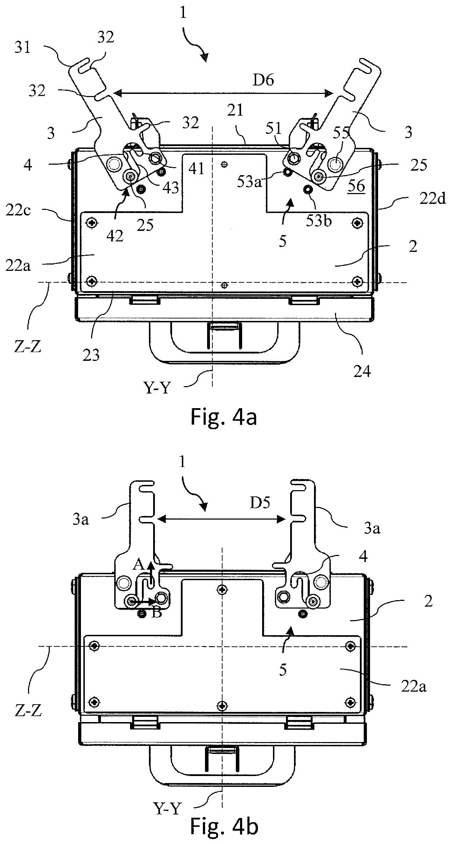

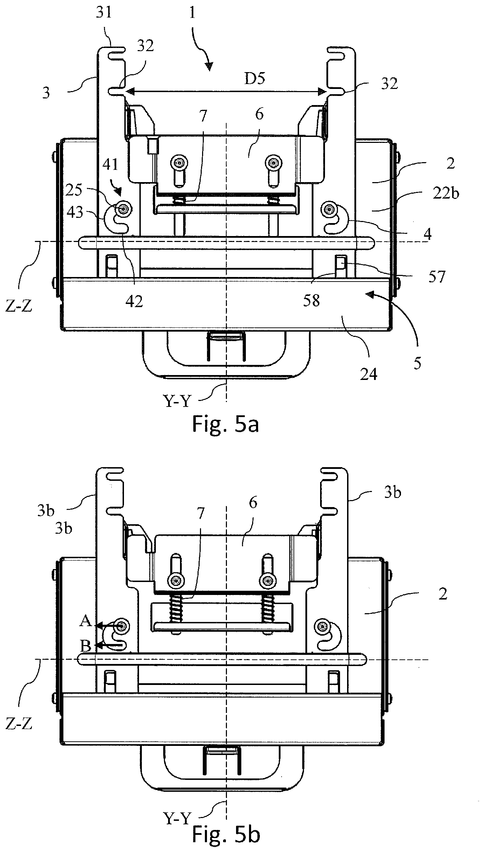

More in detail, the jaws 3 are adapted to be rotated about respective pivots 25 between a closed orientation and an open orientation. In the closed orientation, the attachment members 32 are spaced apart at a first distance D5, and in the open orientation the attachment members 32 are spaced apart at a second distance D6, which is greater than the first distance D5. Different types of jaws 3 are shown in the open orientation in Figures 4a and 5c, and in the closed orientation in Figures 4b, 5a and 5b.

Hence, in the open orientation, the box 1 may be separated from the busbar conduit 100. Conversely, in the closed orientation, the jaws 3 are oriented to maintain the box 1 attached to the busbar conduit 100. Preferably, in the closed orientation, the jaws 3 mainly extend in the longitudinal direction Y-Y. Furthermore, in the closed orientation, the jaws 3 are arranged substantially parallel to each other.

Particularly, the distance D5 between the attachment members 32 in the closed orientation substantially corresponds to the distance D3 or D4 between the support elements 108 of the busbar conduit 100, preferably at the main portion 107a or the connecting portion 107b.

As explained in greater detail below, in the closed orientation the first two jaws 3a may be also spaced apart at a distance other than the distance between the two second jaws 3b. This is because the box may be fixed to the busbar conduit 100 in such a position as to straddle the mail portion 107a and the connecting portion 107b, and particularly in such a position the first side wall 22a and the first two jaws 3a will be placed at the connecting portion 107b, and the second side wall 22b and the second jaws 3b will be placed at the main portion 107a.

The box 1 comprises a guide 4 for each pivot 25. Therefore, the box 1 comprises at least two guides 4, and in the preferred embodiment it comprises two first guides for the two first pivots and two second guides for the two second pivots. Each pivot 25 is slidable along a respective guide 4.

The guides 4 may be provided, for example, in the form of slots. If the pivots 25 are fixed to the container 2, the guides 4 will be associated with (or formed in) respective jaws 3. Conversely, the guides 4 may be associated with (or formed in) the container 2 if the pivots 25 are fixed to the jaws 3. The two guides 4 are spaced apart in the transverse direction Z-Z.

Each guide 4 extends between a first end 41 and a second end 42. It will be appreciated that the jaws 3 are adapted to rotate relative to the container 2 to clamp a busbar conduit 100 as described above, both when the pivots 25 are located at the first ends 41 and when the pivots 25 are at the second ends 42. Nevertheless, the first distance D5 and the second distance D3 may change depending on whether the open and closed orientations are considered with the pivots 25 being located at the first or second ends 41, 42 of the guides 4, and the comparisons of such distances D5, D6 to determine the open and closed orientations shall be made with reference, each time, to the pivots 26 being located in the same end.

In other words, first and second rotation seats for the pivots 25 are defined for each guide 4 respectively by the first and second ends 41, 42. The pivots 25 in turn define rotation centers for their respective jaws 3 to rotate between the closed orientation and the open orientation, irrespective of whether the pivots 25 are at the first or second ends 41, 42 of the guides 4, with the pivots 25 not sliding along the corresponding guides 4.

It shall be noted that the pivots 25 that act as a substantially exclusive support for the container 2 relative to the jaws 3 are the same pivots that are adapted to slide along the guides 4 and act as a rotation center for the jaws 3.

The first and second ends 41, 42 of each guide 4 are spaced apart at least in the longitudinal direction Y-Y. This allows the box 1 to fit various busbar conduits 100, so that the attachment members 32 of the jaws 3 will be always in their proper position relative to the support elements 108 of the busbar conduit 100.

More in detail, the ends 41, 42 of the guides 4 may be spaced apart from each other only in the longitudinal direction Y-Y or in the longitudinal direction Y-Y and the transverse direction Z-Z. In the latter case, the box 1 is also able to fit busbar conduits 100 with different transverse extents.

In the preferred embodiment, it will be appreciated that the ends 41, 42 of the guides associated with the two first jaws 3a are spaced apart in the longitudinal direction Y-Y and the transverse direction Z-Z, whereas the ends 41, 42 of the guides associated with the two second jaws 3b are spaced from each other in the longitudinal direction Y-Y only. Therefore, the jaws 3 may be in such positions as to fit both conduits 100 with uniform transverse dimensions, and conduits 100 with narrow portions (e.g. if the main portion 107a) and wide portions (e.g. the connecting portion 107b).

In one aspect of the invention, each guide 4 is shaped such as to prevent the respective pivot 25, when the pivot 25 is located at the first end 41, from moving in the longitudinal direction Y-Y toward the second end 42, namely from moving in directions having longitudinal components oriented toward the second end 42.

Furthermore, each guide 4 is shaped such as to prevent the respective pivot 25 from moving in the longitudinal direction Y-Y away from the first end 41, when the pivot 25 is located at the second end 42.

In order to identify the first and second ends 41, 42 of the guides 4, it shall be noted that the distance between the attachment members 32 and the base 21 of the container 2 is greater when the pivots 25 are located at the second ends 42 of the guides 4 than when the pivots 25 are located at the first ends 41 of the guides 4. Such distance has to be considered when the jaws 3 are in the closed orientation. The first end 41 may be also understood as the end of the guide 4 which, in use, is in such a position that the weight of the container 2 would cause the pivots 25 to move toward the second ends 42.

For example, in the embodiment in which the pivots 25 are connected or fixed to the container 2, and the guides 4 are associated with the jaws 3, for each guide 4 the first end 41 is longitudinally placed between the second end 42 and the attachment member 32 or the free end portion 31 of the jaw 3. Conversely, in the embodiment (not shown), in which the pivots 25 are connected or fixed to the jaws 3, and the guides 4 are associated with the container 2, for each guide 4 the second end 42 is longitudinally placed between the first end 41 and the attachment member 32 or the free end portion 31 of the jaw 3.

It shall be noted that the second end 42 of each guide 4 is less exposed than the first end 41 to problems of unstable positioning of its respective pivot 25, and the guides 4 of prior art boxes also allow the pivot 25 to remain at the second end 42 without requiring special locking systems, simply due to the weight of the container 2.

However, with the above discussed characteristics of the invention, the guides 4 are shaped such that that, when the container 2 is held suspended by the jaws 3 and the pivots 25 are at any one of the ends 41, 42 of the guides 4, the weight of the container 2 will maintain the pivots 25 at said ends 41, 42.

In other words, each guide 4 is shaped such as to retain its respective pivot 25 at the first and second ends 41, 42, when the pivot 25 is located at the first and second ends 41, 42, respectively, and a pulling force (such as the weight of the container 2) acts to move the container 2 away from the free end portions 31 of the jaws 3.

More in detail, each guide 4 is oriented in a first sliding direction A at the first end 41, and in a second sliding direction B at the second end 42. The sliding directions A and B will be described with reference to the jaws 3 in the closed orientation.

The first sliding direction shall be intended as the direction tangent to a trajectory followed by the pivot 25, at the first end 41 of the guide 4, when the pivot 25 slides from the first end 41 to the second end 42, the first sliding direction being oriented in the sliding direction of the pivot 25. Likewise, the second sliding direction B shall be intended as the direction tangent to a trajectory followed by the pivot 25, at the second end 42 of the guide 4, when the pivot 25 slides from the second end 42 to the first end 41, the second sliding direction B being oriented in the sliding direction of the pivot 25.

The first and second sliding directions A, B may generally have longitudinal and/or transverse components, and each of these components may be oriented. In the embodiments of the invention the first sliding direction A is substantially orthogonal to the longitudinal direction Y-Y, or has a longitudinal component directed away from the second end 42. In addition, the second sliding direction B is substantially orthogonal to the longitudinal direction Y-Y, or has a longitudinal component directed toward the second end 42.

It will be thus appreciated that, if the first and second sliding directions A, B have both a longitudinal component, the two longitudinal components have the same orientation. This orientation is opposite to the movement the pivot 25 along the guide 4, caused by a pulling action of the container, 2 away from the free end portions 31 of the jaws 3. In particular, if the pivots 25 are fixed to the container 2, the two orientations are directed toward the free ends 31 of the jaws 3, whereas if the pivots 25 are fixed to the jaws 3, the two orientations are directed away from the free ends 31 of the jaws 3.

Therefore, it will be apparent that, due to the above described first sliding direction A, the guides 4 will prevent the pivots 25 from moving in directions having longitudinal components Y-Y oriented toward the second end 42, when the pivots 25 are located at the first end 41. Nevertheless, the pivots 25 may still move in similar directions at later times, once the pivots 25 have left the first ends 41 of the guides 4.

Of course, the term "oriented toward" shall be intended in the sense of a vector orientation. A directional component shall not be understood as "oriented toward" only because the path defined by the guide 3 will inevitably lead from the first end 41 to the second end 42.

For increased stability, especially in the embodiments in which the first sliding direction A is orthogonal to the longitudinal direction Y-Y, lock members 5 may be provided, as described in greater detail below.

A guide 4 with similar characteristics obviously has a non-straight development. In particular each guide 4 has an intermediate portion 43 between the first and second ends 41, 42, which is spaced apart from the first end 41 at least in the transverse direction Z-Z. This occurs irrespective of the fact that the two ends 41, 42 of the guide 4 are spaced apart in the longitudinal direction Y-Y only or also in the transverse direction Z-Z.

In one embodiment the two guides 4 have a C shape, and particularly the first and second sliding directions A, B are perpendicular to the longitudinal direction Y-Y This embodiment is shown for the two second guides in Figures 5a-5c. In this embodiment the two ends 41, 42 are spaced in the longitudinal direction Y-Y only.

Also, in the illustrated embodiment, the two first guides, as shown in Figures 4a-4b, have a first longitudinal sliding direction A directed away from the second ends 42, and a second sliding direction B perpendicular to the longitudinal direction. In these guides 4 the two ends 41, 42 are spaced apart in both the longitudinal direction Y-Y and the transverse direction Z-Z.

In embodiments that are not shown herein, the guides 4 may be also formed with an L-, J- or Z-shape (without the central leg of the Z not being necessarily inclined to the longitudinal direction Y-Y).

Optionally, the box 1 comprises locking members 5, which are configured to lock the jaws 3 relative to the container 2 in the closed orientation at least when the pivots 25 are at the ends 41, 42 of the guides 4. More in detail, the locking members 5 are rotation locking members, which means that they are configured to prevent rotation of the jaws 3 relative to the container 2 both when the pivots 25 are located at the first ends 41 of the guides 4 and when the pivots 25 are located at the second ends 42 of the guides 4.

The locking members 5 generally act on a portion of the jaw 3 that is spaced apart from the pivot 25 to prevent a movement thereof in the transverse direction Z-Z. Therefore, the locking members 5 generally prevent both the rotation of the jaws 3, and movements of the jaws 3 in the transverse direction Z-Z, Also, the locking members 5 do not need to act in the longitudinal direction Y-Y, which was instead the main function of the locking members of the prior art.

It will be appreciated that the locking members 5 may provide additional safety against the sliding motion of the pivots 25 along the guides 4, especially when the first sliding direction A is orthogonal to the longitudinal direction Y-Y. This is because the locking members 5 may cooperate with the shape of the guides 4, particularly referring to the first sliding direction A, to prevent the pivots 25 from moving away from the first ends 41 of the guides 4 under the action of the weight force or other pull forces that would tend to move the container 2 away from the free ends 31 of the jaws 3. More in detail, such movements are prevented longitudinally by the first sliding direction A and transversely by the locking members 5.

In one embodiment, as shown in Figures 4a-4b with reference to the first two jaws 3A, the locking members 5 comprise, for each jaw 3, a locking rod 51 connected to the jaw 3. The locking rod 51 mainly extends in the direction of extension X-X, and is adapted to move relative to the jaw 3 in the direction of extension X-X. Preferably, the locking members 5 comprise an elastic member 52 that presses the locking rod 51 toward the container 2.

The locking members 5 further comprise first and second locking holes 53a, 53b formed in the container 2. The locking rod is adapted to be inserted into the first and second locking holes 53a, 53b to fasten the jaw 3 to the container 2.

More in detail, the locking holes 53a, 53b are arranged for the locking rods 51 to be inserted into the first and second locking holes 53a, 53b when the pivots 25 are located at the first and second ends respectively 41, 42 of the guides 4, and the jaws 3 are in the closed orientation.

In another embodiment, as shown in Figures 5a-5c with reference to the second jaws 3b, the locking members 5 comprise, for each jaw 3, a locking seat 54 formed in the closure element 24. The jaws 3 are adapted to be at least partially inserted into the locking seats 54, when the jaws 3 are in the closed orientation, to prevent the jaws 3 from rotating relative to the container 2. In particular each jaw 3 has a locking end portion 33 opposite to the free end portion 31, and the locking end portion 33 is adapted to be inserted into a respective locking seat 54.

In order to lock the jaws 3, in this embodiment, the jaws 3 will be simply moved to the closed orientation and the closure element 24 will be later fixed to the container 2.

In a further embodiment the locking members 5 comprise two magnets 55 fixed to respective jaws 3, and the container 2 comprises at least two metal portions 56 facing the magnets. For example the container 2 may be entirely made of metal, or comprise two metal plates. Advantageously these locking members 5 are configured to prevent the jaws 3 from rotating even when the jaws 3 are in the open orientation,

Nevertheless, the latter embodiment generally provides less safety than the two embodiments described above for the locking members 5. However, the various embodiments may be combined together to increase safety. In the example of the jaws of Figures 4a, 4, locking members 5 are provided which include both magnets 55 and metal portions 56 on the one hand, and locking rods 51 and locking holes 53a, 53b on the other.

In a further embodiment, that can be combined with the previous embodiments, as shown for example in Figures 5a-5c where locking seats 54 are already provided in the closure element 24, the locking members 5 comprise two teeth 57 fixed to the container 2. The locking members 5 further comprise two notches 58 formed in the jaws 3 and adapted to receive the teeth 57. The teeth 57 are adapted for snap fit engagement in the notches 58 to lock the jaws 3, and are elastically deformable to disengage the notches 58.

Finally, the box 1 optionally comprises a protection element 6 attached to the container 2. The protection element 6 may be designed, for example, with the shape of a plate. The protection element 6 can move relative to the box between a first position in which it is situated between the base 21 and the edge 23 of the container 2, and a second position in which it projects out of the base 21 of the container 2 in the longitudinal direction Y-Y

During installation, the protection element 6 is designed to initially remain in the first position thereby preventing any possible contact between the electric connectors 26 that project out of the base 21 through the opening, and the hands of an installer that holds the box 1. After installation, the protection element 6 abuts the busbar conduit 100, and moves back to the first position.

The box 1 preferably comprises at least one spring 7 configured to counteract the movement of the protection element 6 from the second position to the first position.

## Claims

1. A box (1) for electrical components adapted to be fixed suspended to a busbar conduit (100), comprising:
- a container (2) comprising a base (21) and a plurality of side walls (22a, 22b, 22c, 22d), which extend from the base (21) to an edge (23) that is spaced from the base (21) in a longitudinal direction (Y-Y),
- two jaws (3), that are rotatably attached to one of the side walls (22a, 22b, 22c, 22d), each jaw (3) having an attachment member (32) configured to attach the jaw (3) to a busbar conduit (100),
- two pivots, the two jaws (3) being rotatable about respective pivots (25) between a closed orientation, in which the attachment members (32) are spaced apart at a first distance (D5), and an open orientation, in which the attachment members (32) are spaced apart at a second distance (D6), which is greater than the first distance (D5),
- two guides (4), each extending between a first end (41) and a second end (42) which are spaced apart in the longitudinal direction (Y-Y), each pivot (25) being slidable along a respective guide (4),
- locking members (5) configured to lock the jaws (3) relative to the container (2) in the closed orientation, both when the pivots (25) are located at the first ends (41) of the guides (4) and when the pivots (25) are located at the second ends (42) of the guides (4), **characterized in that** each guide (4), at the first end (41), is oriented in a first sliding direction (A), and
- either the first slide direction (A) is orthogonal to the longitudinal direction (Y-Y),
- or the first sliding direction (A) has a longitudinal component directed away from the second end (42),
each guide (4) thereby preventing the respective pivot (25), when the pivot (25) is located at the first end (41) and the locking members (5) lock the jaws (3) in the closed orientation, from moving in directions having longitudinal components (Y-Y) oriented toward the second end (42),
wherein the guides (4) are shaped such that, when the container (2) is held suspended by the jaws (3) and the pivots (25) are located at the ends (41, 42) of the guides (4) with the jaws (3) being locked in the closed orientation by the locking members (5), the weight of the container (2) maintains the pivots (25) at said ends (41, 42).

2. A box (1) as claimed in claim 1, wherein:
- the pivots (25) are spaced apart along a transverse direction (Z-Z) which is transverse with respect to the longitudinal direction (Y-Y), and
- the locking members (5) are configured to lock the jaws (3) in the closed orientation by preventing movements of the jaws (3) in the transverse direction (Z-Z).

3. A box (1) as claimed in claim 1 or 2, wherein:
- each jaw (3) has a free end portion (31) that projects out of the container (2) in the longitudinal direction (Y-Y), and
- each guide (4) is shaped such as to retain the respective pivot (25) at the first and second ends (41, 42) when:
- the pivot (25) is located at the first and second ends (41, 42) respectively,
- the locking members (5) lock the jaws (3) in the closed orientation, and
- a pull force acts to move the container (2) away from the free end portions (31) of the jaws (3).

4. A box (1) as claimed in any of claims 1 to 3, wherein the two guides (4) have a non-straight development.

5. A box (1) as claimed in any of claims 1 to 4, wherein:
- the pivots (25) are spaced apart along a transverse direction (Z-Z) which is transverse with respect to the longitudinal direction (Y-Y), and
- the first end (41) and the second end (42) of each guide (4) are spaced apart in the transverse direction (Z-Z) and in the longitudinal direction (Y-Y).

6. A box (1) as claimed in any of claims 1 to 5, wherein, both when the pivots (25) are located at the first ends (41) of the guides (4) and when the pivots (25) are located at the second ends (42) of the guides (4), each pivot (25) defines, without sliding along the corresponding guide (4), a center of rotation for the respective jaw (3) for rotating between the closed orientation and the open orientation.

7. A box (1) as claimed in any of claims 1 to 6, wherein the locking members (5) comprise, for each jaw (3):
- a first and a second locking holes (53a, 53b) formed in the container (2), and
- a locking rod (51) connected to the jaw (3) and adapted to be inserted into the first and second locking holes (53a, 53b) to lock the jaw (3) to the container (2),
- wherein the locking rods (51) are adapted to be inserted into the first and second locking holes (53a, 53b) when the pivots (25) are located at the first and second ends (41, 42) of the guides (4), respectively, and the jaws (3) are in the closed orientation.

8. A box (1) as claimed in any of claims 1 to 6, comprising a closing member (24) which is adapted to be fixed to the container (21), the locking members (5) comprising a locking seat, formed in the closing member (24) for each jaw (3), the jaws (3) being adapted to be at least partially inserted into the locking seat (54), when the jaws (3) are in the closed orientation, to lock the rotation of the jaws (3) relative to the container (2).

9. A box (1) as claimed in any of claims 1 to 8, comprising two first jaws (3a) rotatably attached to a first side wall (22a) of the container, and two second jaws (3b) rotatably attached to a second side wall (22b) of the container (2) opposite to the first side wall (22a).

10. A box (1) as claimed in any of claims 1 to 9, wherein:
- the attachment members (32) project in the longitudinal direction (Y-Y) with respect to the base (21) of the container (2), and
- the distance between the attachment members (32) and the base (21) of the container (2) is greater when the pivots (25) are located at the second ends (42) of the guides (4) than when the pivots (25) are located at the first ends (41) of the guides (4).

11. A box (1) as claimed in any of claims 1 to 10, wherein:
- the pivots (25) are connected to the container (2),
- the guides (4) are associated with the jaws (3), and
- the first ends (41) of the guides (4) are placed longitudinally between the attachment members (32) and the second ends (42) of the guides (4).

12. A box (1) as claimed in any of claims 1 to 10, wherein:
- the pivots (25) are connected to the jaws (3),
- the guides (4) are associated with the container (2), and
- the second ends (42) of the guides (4) are placed longitudinally between the attachment members (32) and the first ends (41) of the guides (4).

13. A box (1) as claimed in any of claims 1 to 12, wherein the attachment members (32) are configured to attach the jaws (3) to a busbar conduit (100) so that the container (2) is suspended from the busbar conduit (100) and the weight force acts on the container (2) substantially in the longitudinal direction (Y-Y) away from the busbar conduit (100).

## Patentansprüche

1. Kasten (1) für elektrische Komponenten, der angepasst ist, um aufgehängt an einer Sammelschienenleitung (100) befestigt zu werden, umfassend:
- einen Behälter (2), umfassend einen Boden (21) und eine Vielzahl von Seitenwänden (22a, 22b, 22c, 22d), die sich von dem Boden (21) zu einem Rand (23) erstrecken, der in einer Längsrichtung (Y-Y) von dem Boden (21) beabstandet ist,
- zwei Klemmbacken (3), die drehbar an einer der Seitenwände (22a, 22b, 22c, 22d) angebracht sind, wobei jede Klemmbacke (3) ein Anbringungselement (32) aufweist, das konfiguriert ist, um die Klemmbacke (3) an einer Sammelschienenleitung (100) anzubringen,
- zwei Drehzapfen, wobei die zwei Klemmbacken (3) um jeweilige Drehzapfen (25) zwischen einer geschlossenen Ausrichtung, in der die Anbringungselemente (32) in einem ersten Abstand (D5) beabstandet sind, und einer offenen Ausrichtung, in der die Anbringungselemente (32) in einem zweiten Abstand (D6) voneinander beabstandet sind, der größer ist als der erste Abstand (D5), drehbar sind,
- zwei Führungen (4), die sich jeweils zwischen einem ersten Ende (41) und einem zweiten Ende (42) erstrecken, die in der Längsrichtung (Y-Y) voneinander beabstandet sind, wobei jeder Drehzapfen (25) entlang einer jeweiligen Führung (4) verschiebbar ist,
- Verriegelungselemente (5), die konfiguriert sind, um die Klemmbacken (3) in Bezug auf den Behälter (2) in der geschlossenen Ausrichtung zu verriegeln, sowohl wenn sich die Drehzapfen (25) an den ersten Enden (41) der Führungen (4) befinden, als auch wenn sich die Drehzapfen (25) an den zweiten Enden (42) der Führungen (4) befinden,
**dadurch gekennzeichnet, dass** jede Führung (4) an dem ersten Ende (41) in einer ersten Gleitrichtung (A) ausgerichtet ist, und
- entweder die erste Gleitrichtung (A) orthogonal zu der Längsrichtung (Y-Y) ist,
- oder die erste Gleitrichtung (A) eine Längskomponente aufweist, die weg von dem zweiten Ende (42) gerichtet ist,
jede Führung (4) dadurch verhindert, dass, wenn sich der Drehzapfen (25) an dem ersten Ende (41) befindet und die Verriegelungselemente (5) die Klemmbacken (3) in der geschlossenen Ausrichtung verriegeln, sich der jeweilige Drehzapfen (25) in Richtungen bewegt, die Längskomponenten (Y-Y) aufweisen, die zu dem zweiten Ende (42) ausgerichtet sind,
wobei die Führungen (4) geformt sind, sodass, wenn der Behälter (2) durch die Klemmbacken (3) hängend gehalten wird und die Drehzapfen (25) an den Enden (41, 42) der Führungen (4) angeordnet sind, wobei die Klemmbacken (3) in der geschlossenen Ausrichtung durch die Verriegelungselemente (5) verriegelt sind, das Gewicht des Behälters (2) die Drehzapfen (25) an den Enden (41, 42) hält.

2. Kasten (1) nach Anspruch 1, wobei:
- die Drehzapfen (25) entlang einer Querrichtung (Z-Z) voneinander beabstandet sind, die in Bezug auf die Längsrichtung (Y-Y) quer ist, und
- die Verriegelungselemente (5) konfiguriert sind, um die Klemmbacken (3) in der geschlossenen Ausrichtung zu verriegeln, indem Bewegungen der Klemmbacken (3) in der Querrichtung (Z-Z) verhindert werden.

3. Kasten (1) nach Anspruch 1 oder 2, wobei:
- jede Klemmbacke (3) einen freien Endabschnitt (31) aufweist, der in Längsrichtung (Y-Y) aus dem Behälter (2) hervorsteht, und
- jede Führung (4) geformt ist, um den jeweiligen Drehzapfen (25) an dem ersten und dem zweiten Ende (41, 42) zurückzuhalten, wenn:
- sich der Drehzapfen (25) jeweils an dem ersten bzw. dem zweiten Ende (41, 42) befindet,
- die Verriegelungselemente (5) die Klemmbacken (3) in der geschlossenen Ausrichtung verriegeln, und
- eine Zugkraft wirkt, um den Behälter (2) weg von den freien Endabschnitten (31) der Klemmbacken (3) zu bewegen.

4. Kasten (1) nach einem der Ansprüche 1 bis 3, wobei die zwei Führungen (4) einen nicht geraden Verlauf aufweisen.

5. Kasten (1) nach einem der Ansprüche 1 bis 4, wobei:
- die Drehzapfen (25) entlang einer Querrichtung (Z-Z) voneinander beabstandet sind, die in Bezug auf die Längsrichtung (Y-Y) quer ist, und
- das erste Ende (41) und das zweite Ende (42) von jeder Führung (4) in der Querrichtung (Z-Z) und in der Längsrichtung (Y-Y) voneinander beabstandet sind.

6. Kasten (1) nach einem der Ansprüche 1 bis 5, wobei sowohl, wenn sich die Drehzapfen (25) an den ersten Enden (41) der Führungen (4) befinden, als auch, wenn sich die Drehzapfen (25) an den zweiten Enden (42) der Führungen (4) befinden, jeder Drehzapfen (25), ohne entlang der entsprechenden Führung (4) zu gleiten, einen Drehpunkt für die jeweilige Klemmbacke (3) definiert, um zwischen der geschlossenen Ausrichtung und der offenen Ausrichtung zu drehen.

7. Kasten (1) nach einem der Ansprüche 1 bis 6, wobei die Verriegelungselemente (5) für jede Klemmbacke (3) Folgendes umfassen:
- ein erstes und ein zweites Verriegelungsloch (53a, 53b), die in dem Behälter (2) gebildet sind, und
- eine Verriegelungsstange (51), die mit der Klemmbacke (3) verbunden und angepasst ist, um in das erste und das zweite Verriegelungsloch (53a, 53b) eingeführt zu werden, um die Klemmbacke (3) an dem Behälter (2) zu verriegeln,
- wobei die Verriegelungsstangen (51) angepasst sind, um in das erste und das zweite Verriegelungsloch (53a, 53b) eingeführt zu werden, wenn sich die Drehzapfen (25) an dem ersten bzw. dem zweiten Ende (41, 42) der Führungen (4) befinden und die Klemmbacken (3) in der geschlossenen Ausrichtung sind.

8. Kasten (1) nach einem der Ansprüche 1 bis 6, umfassend ein Schließelement (24), das angepasst ist, um an dem Behälter (21) befestigt zu werden, die Verriegelungselemente (5) umfassend einen Verriegelungssitz, der in dem Schließelement (24) für jede Klemmbacke (3) gebildet ist, wobei die Klemmbacken (3) angepasst sind, um mindestens teilweise in den Verriegelungssitz (54) eingeführt zu werden, wenn die Klemmbacken (3) in der geschlossenen Ausrichtung sind, um die Drehung der Klemmbacken (3) in Bezug auf den Behälter (2) zu verriegeln.

9. Kasten (1) nach einem der Ansprüche 1 bis 8, umfassend zwei erste Klemmbacken (3a), die drehbar an einer ersten Seitenwand (22a) des Behälters angebracht sind, und zwei zweite Klemmbacken (3b), die drehbar an einer zweiten Seitenwand (22b) des Behälters (2) gegenüber der ersten Seitenwand (22a) angebracht sind.

10. Kasten (1) nach einem der Ansprüche 1 bis 9, wobei:
- die Anbringungselemente (32) in Längsrichtung (Y-Y) in Bezug auf den Boden (21) des Behälters (2) hervorstehen, und
- der Abstand zwischen den Anbringungselementen (32) und dem Boden (21) des Behälters (2) größer ist, wenn sich die Drehzapfen (25) an den zweiten Enden (42) der Führungen (4) befinden, als wenn sich die Drehzapfen (25) an den ersten Enden (41) der Führungen (4) befinden.

11. Kasten (1) nach einem der Ansprüche 1 bis 10, wobei:
- die Drehzapfen (25) mit dem Behälter (2) verbunden sind,
- die Führungen (4) mit den Klemmbacken (3) assoziiert sind, und
- die ersten Enden (41) der Führungen (4) in Längsrichtung zwischen den Anbringungselementen (32) und den zweiten Enden (42) der Führungen (4) platziert sind.

12. Kasten (1) nach einem der Ansprüche 1 bis 10, wobei:
- die Drehzapfen (25) mit den Klemmbacken (3) verbunden sind,
- die Führungen (4) mit dem Behälter (2) assoziiert sind, und
- die zweiten Enden (42) der Führungen (4) in Längsrichtung zwischen den Anbringungselementen (32) und den ersten Enden (41) der Führungen (4) platziert sind.

13. Behälter (1) nach einem der Ansprüche 1 bis 12, wobei die Anbringungselemente (32) konfiguriert sind, um die Klemmbacken (3) an einer Sammelschienenleitung (100) anzubringen, sodass der Behälter (2) an der Sammelschienenleitung (100) aufgehängt ist und die Gewichtskraft im Wesentlichen in der Längsrichtung (Y-Y) weg von der Sammelschienenleitung (100) auf den Behälter (2) wirkt.

## Revendications

1. Boîtier (1) pour composants électriques apte à être fixé suspendu à un conduit de barre omnibus (100), comprenant :
- un conteneur (2) comprenant une base (21) et une pluralité de parois latérales (22a, 22b, 22c, 22d), qui s'étendent de la base (21) à un bord (23) qui est espacé de la base (21) dans une direction longitudinale (Y-Y),
- deux mâchoires (3), qui sont attachées de manière rotative à l'une des parois latérales (22a, 22b, 22c, 22d), chaque mâchoire (3) ayant un élément d'attache (32) configuré pour attacher la mâchoire (3) à un conduit de barre omnibus (100),
- deux pivots, les deux mâchoires (3) pouvant pivoter autour des pivots (25) respectifs entre une orientation fermée, dans laquelle les éléments d'attache (32) sont espacés d'une première distance (D5), et une orientation ouverte, dans laquelle les éléments d'attache (32) sont espacés d'une seconde distance (D6), qui est supérieure à la première distance (D5),
- deux guides (4), chacun s'étendant entre une première extrémité (41) et une seconde extrémité (42) qui sont espacées dans la direction longitudinale (Y-Y), chaque pivot (25) pouvant coulisser le long d'un guide (4) respectif,
- des éléments de verrouillage (5) configurés pour verrouiller les mâchoires (3) par rapport au conteneur (2) dans l'orientation fermée, soit lorsque les pivots (25) sont situés aux premières extrémités (41) des guides (4) soit lorsque les pivots (25) sont situés aux secondes extrémités (42) des guides (4),
**caractérisé en ce que** chaque guide (4), à la première extrémité (41), est orienté dans une première direction de coulissement (A), et
- la première direction de coulissement (A) est orthogonale à la direction longitudinale (Y-Y),
- ou la première direction de coulissement (A) a une composante longitudinale dirigée à l'opposé de la seconde extrémité (42),
chaque guide (4) empêchant ainsi le pivot (25) respectif, lorsque le pivot (25) est situé à la première extrémité (41) et que les éléments de verrouillage (5) verrouillent les mâchoires (3) dans l'orientation fermée, de se déplacer dans des directions ayant des composantes longitudinales (Y-Y) orientées vers la seconde extrémité (42),
dans lequel les guides (4) sont conformés de sorte que, lorsque le conteneur (2) est maintenu suspendu par les mâchoires (3) et que les pivots (25) sont situés aux extrémités (41, 42) des guides (4), les mâchoires (3) étant verrouillées dans l'orientation fermée par les éléments de verrouillage (5), le poids du conteneur (2) maintient les pivots (25) auxdites extrémités (41, 42).

2. Boîtier (1) selon la revendication 1, dans lequel :
- les pivots (25) sont espacés le long d'une direction transversale (Z-Z) qui est transversale par rapport à la direction longitudinale (Y-Y), et
- les éléments de verrouillage (5) sont configurés pour verrouiller les mâchoires (3) dans l'orientation fermée en empêchant les mouvements des mâchoires (3) dans la direction transversale (Z-Z).

3. Boîtier (1) selon la revendication 1 ou 2, dans lequel :
- chaque mâchoire (3) a une partie d'extrémité libre (31) qui fait saillie hors du conteneur (2) dans la direction longitudinale (Y-Y), et
- chaque guide (4) est formé de manière à retenir le pivot (25) respectif aux première et seconde extrémités (41, 42) lorsque :
- le pivot (25) est situé, respectivement, aux première et seconde extrémités (41, 42),
- les éléments de verrouillage (5) verrouillent les mâchoires (3) dans l'orientation fermée, et
- une force de traction agit pour éloigner le conteneur (2) des parties d'extrémité libres (31) des mâchoires (3).

4. Boîtier (1) selon l'une quelconque des revendications 1 à 3, dans lequel les deux guides (4) ont un développement non rectiligne.

5. Boîtier (1) selon l'une quelconque des revendications 1 à 4, dans lequel :
- les pivots (25) sont espacés le long d'une direction transversale (Z-Z) qui est transversale par rapport à la direction longitudinale (Y-Y), et
- la première extrémité (41) et la seconde extrémité (42) de chaque guide (4) sont espacées dans la direction transversale (Z-Z) et dans la direction longitudinale (Y-Y).

6. Boîtier (1) selon l'une quelconque des revendications 1 à 5, dans lequel, soit lorsque les pivots (25) sont situés aux premières extrémités (41) des guides (4) soit lorsque les pivots (25) sont situés aux secondes extrémités (42) des guides (4), chaque pivot (25) définit, sans coulisser le long du guide correspondant (4), un centre de rotation pour la mâchoire (3) respective pour pivoter entre l'orientation fermée et l'orientation ouverte.

7. Boîtier (1) selon l'une quelconque des revendications 1 à 6, dans lequel les éléments de verrouillage (5) comprennent, pour chaque mâchoire (3) :
- un premier et un second trous de verrouillage (53a, 53b) formés dans le conteneur (2), et
- une tige de verrouillage (51) reliée à la mâchoire (3) et apte à être insérée dans les premier et second trous de verrouillage (53a, 53b) pour verrouiller la mâchoire (3) au conteneur (2),
- dans lequel les tiges de verrouillage (51) sont aptes à être insérées dans les premier et second trous de verrouillage (53a, 53b) lorsque les pivots (25) sont situés, respectivement, aux première et seconde extrémités (41, 42) des guides (4), et que les mâchoires (3) sont dans l'orientation fermée.

8. Boîtier (1) selon l'une quelconque des revendications 1 à 6, comprenant un élément de fermeture (24) qui est apte à être fixé au conteneur (21), les éléments de verrouillage (5) comprenant un siège de verrouillage, formé dans l'élément de fermeture (24) pour chaque mâchoire (3), les mâchoires (3) étant aptes à être insérées au moins partiellement dans le siège de verrouillage (54), lorsque les mâchoires (3) sont dans l'orientation fermée, pour verrouiller la rotation des mâchoires (3) par rapport au conteneur (2).

9. Boîtier (1) selon l'une quelconque des revendications 1 à 8, comprenant deux premières mâchoires (3a) attachées de manière rotative à une première paroi latérale (22a) du conteneur, et deux secondes mâchoires (3b) attachées de manière rotative à une seconde paroi latérale (22b) du conteneur (2) opposée à la première paroi latérale (22a).

10. Boîtier (1) selon l'une quelconque des revendications 1 à 9, dans lequel :
- les éléments d'attache (32) font saillie dans la direction longitudinale (Y-Y) par rapport à la base (21) du conteneur (2), et
- la distance entre les éléments d'attache (32) et la base (21) du conteneur (2) est plus grande lorsque les pivots (25) sont situés aux secondes extrémités (42) des guides (4) que lorsque les pivots (25) sont situés aux premières extrémités (41) des guides (4).

11. Boîtier (1) selon l'une quelconque des revendications 1 à 10, dans lequel :
- les pivots (25) sont reliés au conteneur (2),
- les guides (4) sont associés aux mâchoires (3), et
- les premières extrémités (41) des guides (4) sont placées longitudinalement entre les éléments d'attache (32) et les secondes extrémités (42) des guides (4).

12. Boîtier (1) selon l'une quelconque des revendications 1 à 10, dans lequel :
- les pivots (25) sont reliés aux mâchoires (3),
- les guides (4) sont associés au conteneur (2), et
- les secondes extrémités (42) des guides (4) sont placées longitudinalement entre les éléments d'attache (32) et les premières extrémités (41) des guides (4).

13. Boîtier (1) selon l'une quelconque des revendications 1 à 12, dans lequel les éléments d'attache (32) sont configurés pour attacher les mâchoires (3) à un conduit de barre omnibus (100) de sorte que le conteneur (2) soit suspendu au conduit de barre omnibus (100) et la force de poids agisse sur le conteneur (2) sensiblement dans la direction longitudinale (Y-Y) loin du conduit de barre omnibus (100).
